# EUROPÄISCHE PATENTSCHRIFT

(11) **EP 0 974 901 B1**
(45) Veröffentlichungstag und Bekanntmachung des Hinweises auf die Patenterteilung: **09.12.2009**
(21) Anmeldenummer: 99440197.4
(22) Anmeldetag: 13.07.1999
(51) Int. Cl.: G06F 11/00, G06F 11/18

(54) **Verfahren zur Ermittlung einer einheitlichen globalen Sicht vom Systemzustand eines verteilten Rechnernetzwerkes**
Method to determine a uniform global view of the system states in a distributed computer network
Méthode de détermination d'une vue globale homogène des états d'un réseau d'ordinateurs distribué

(30) Priorität: 15.07.1998 DE 19831720
(43) Veröffentlichungstag der Anmeldung: 26.01.2000
(73) Patentinhaber: Alcatel Lucent, 75008 Paris (FR)
(72) Erfinder: Kantz, Heinz, Dr., 1230 Wien (DE); Scheck, Oliver, 1220 Wien (DE); Metzner, Peter, 1160 Wien (DE)
(74) Vertreter: Kohler Schmid Möbus

(56) Entgegenhaltungen:
- EZHILCHELVAN P D ET AL: "A robust group membership algorithm for distributed real-time systems" PROCEEDINGS OF THE REAL TIME SYSTEMS SYMPOSIUM. LAKE BUENA VISTA, DEC. 5 - 7, 1990, WASHINGTON, IEEE. COMP. SOC. PRESS, US, Bd. SYMP. 11, 5. Dezember 1990 (1990-12-05), Seiten 173-179, XP010022048 ISBN: 0-8186-2112-5
- CRISTIAN F: "Agreeing on who is present and who is absent in a synchronous distributed system" FAULT-TOLERANT COMPUTING, 1988. FTCS-18, DIGEST OF PAPERS., EIGHTEENTH INTERNATIONAL SYMPOSIUM ON TOKYO, JAPAN 27-30 JUNE 1988, WASHINGTON, DC, USA,IEEE COMPUT. SOC. PR, US, 27. Juni 1988 (1988-06-27), Seiten 206-211, XP010013193 ISBN: 0-8186-0867-6
- MOSER L E ET AL: "Membership algorithms for asynchronous distributed systems" INTERNATIONAL CONFERENCE ON DISTRIBUTED COMPUTING SYSTEMS. ARLINGTON, TEXAS, MAY 20 - 24, 1991, PROCEEDINGS OF THE INTERNATIONAL CONFERENCE ON DISTRIBUTED COMPUTING SYSTEMS, LOS ALAMITOS, IEEE COMP. SOC. PRESS, US, Bd. CONF. 11, 20. Mai 1991 (1991-05-20), Seiten 480-488, XP010023088 ISBN: 0-8186-2144-3

## Beschreibung

Die Erfindung betrifft ein Verfahren zur Ermittlung einer einheitlichen globalen Sicht vom Systemzustand eines wenigstens drei Rechner umfassenden verteilten Rechnernetzwerks. Die Erfindung betrifft ferner ein verteiltes Rechnernetzwerk zur Ausführung des Verfahrens.

### Einführung

In verteilten Rechnernetzwerken kommt es gelegentlich durch beabsichtigte Ereignisse (z. B. Hinzufügen eines zusätzlichen Rechners) oder auch durch unbeabsichtige Ereignisse (z. B. Ausfall eines Rechners) zu Änderungen des Systemzustands. Bei einer solchen Änderung ist sicherzustellen, daß die Rechner im Rechnernetzwerk möglichst schnell zu einer einheitlichen globalen Sicht vom neuen Systemzustand gelangen. Das Problem, wie eine einheitliche globale Sicht vom Systemzustand herbeigeführt werden kann, wird häufig auch als "Mitgliedschaftsproblem" bezeichnet.

Besondere Bedeutung hat dieses Mitgliedschaftsproblem in verteilten Rechnernetzwerken, die zur Überwachung und Steuerung sicherheitskritischer Prozesse, etwa in der Eisenbahnsignaltechnik oder in der Kraftwerkstechnik eingesetzt werden. In diesen Rechnernetzwerken gleichen die einzelnen Rechner ihre Ergebnisse untereinander ab. Ergebnisse werden nur dann an den Prozeß ausgegeben, wenn sie von einer Mehrheit der Rechner unabhängig voneinander ermittelt worden sind. Fällt beispielsweise bei einem derartigen Rechnernetzwerk von drei vorhandenen Rechnern ein Rechner aus, so können die anderen beiden Rechner weiterhin Ergebnisse an den Prozeß ausgeben. Dies setzt aber voraus, daß diese beiden Rechner zu einer einheitlichen globalen Sicht vom Systemzustand gekommen sind, d. h. es muß Einigkeit darüber bestehen, welcher Rechner ausgefallen ist und welche Rechner fehlerfrei sind.

Aus einer Veröffentlichung von L. E. Moser et al. mit dem Titel Membership Algorithms forAsynchronous Distributed System", 11th Int. Conf on Distributed Computing Systems, Seiten 480 - 488, Arlington, TX, USA, Mai 1991, sind verschiedene Algorithmen zur Lösung des Mitgliedschaftsproblems für ein ungekoppeltes verteiltes Rechnernetzwerk bekannt. Diese Algorithmen beruhen auf einer Fehlerhypothese, nach der Rechner entweder keine oder richtige Nachrichten senden. Der Fall, daß ein Rechner eine fehlerhafte Nachricht sendet, wird nicht angenommen. Die dort beschriebenen Algorithmen sehen Nachrichten vor, deren Aussendung wiederholt wird, falls ein Empfänger die Nachricht nicht erhalten hat. Außerdem gibt es Nachrichten, deren Aussendung in einem solchen Fall nicht wiederholt wird. Zu dieser letzten Gruppe gehören beispielsweise die Antragsnachrichten, mit denen ein Rechner den anderen Rechnern mitteilt, daß er wieder Mitglied werden möchte. Die Zulassung zu einem solchen Antrag erteilen die anderen Rechner mit speziellen Zulassungsnachrichten. Die dort beschriebenen Algorithmen sind jedoch auf ungekoppelte Rechnernetzwerke beschränkt und lassen sich nicht ohne weiteres auf synchrone oder virtuell synchrone verteilte Rechnernetzwerke übertragen.

In P. Elzhilchelvan et. al., A robust group membership algorithm for distributed real-time systems", IEEE 1990, S. 173 ff. wird ein Mitgliedschaftsalgorithmus beschrieben, bei dem mehrere Prozessoren in Zyklen untereinander Nachrichten austauschen, um die Funktionsfähigkeit der beteiligten Prozessoren zu bestimmen. Die Funktionsfähigkeit der Prozessoren wird über einen Mitgliedschafts-Status-Vector (MSV) dargestellt. In jedem Zyklus überträgt jeder Prozessor einen ihm vorliegenden und lokal gespeicherten MSV (der die globale Sicht des Systems laut jeweiligem Prozessor repräsentiert) an jeden anderen Prozessor. Aus den einem Prozessor vorliegenden MSVs aller Prozessoren wird ein neuer MSV dieses Prozessors für den nächsten Zyklus erzeugt. Nicht fehlerhafte Prozessoren ermitteln auf diese Weise identische MSVs.

Die EP 0 905 623 A2 beschreibt ein Verfahren zum Austausch von Datenpaketen innerhalb eines sicheren Mehrrechnersystems. Ein Austausch von Datenpaketen erfolgt dabei in Übertragungsrunden. Jeder Rechner kann dabei eine lokale Sicht vom Systemstatus erstellen, indem er die empfangenen Datenpakete auswertet. Durch Übermittlung der lokalen Sicht an alle anderen Rechner ist es möglich, daß jeder Rechner eine globale Sicht vom Systemstatus erstellt. Dieses Dokument fällt unter den Bestimmungen von Artikel 54(3) EPÜ.

### Aufgabe

Es ist daher Aufgabe der Erfindung, ein Verfahren zur Ermittlung einer einheitlichen globalen Sicht vom Systemzustand eines wenigstens drei Rechner umfassenden synchronen oder virtuell synchronen verteilten Rechnernetzwerks anzugeben. Es ist ferner Aufgabe der Erfindung, ein verteiltes Rechnernetzwerk zur Ausführung des Verfahrens anzugeben.

### Zusammenfassung der Erfindung

Die Erfindung löst diese Aufgabe mit Hilfe der in Verfahrensanspruchs 1 und System anspruch 6 angegebenen Merkmale. Erfindungsgemäß ist vorgesehen, daß die Kommunikation zwischen den Rechnern in Form von Übertragungsrunden abgewickelt wird. Eine Übertragungsrunde ist dadurch charakterisiert, daß im fehlerfreien Fall in einer Übertragungsrunde jeder Rechner von jedem anderen Rechner eine Nachricht empfängt. Jeder Rechner wertet die von den anderen Rechnern empfangenen Nachrichten aus und ordnet in Abhängigkeit vom Ergebnis der Auswertung jedem der anderen Rechner einen von wenigstens drei unterschiedlich definierten Rechnerzuständen zu. Jeder Rechner ermittelt auf diese Weise eine eigene lokale Sicht vom Systemzustand. Diese lokalen Sichten tauschen die Rechner untereinander aus. Jeder Rechner ermittelt anschließend aus den empfangenen lokalen Sichten eine globale Sicht vom Systemzustand. Dies kann beispielsweise dadurch geschehen, daß er die lokalen Sichten einem Mehrheitsentscheid unterwirft. Da allen Rechner die gleichen lokalen Sichten vorliegen, kommen alle Rechner zur selben globalen Sicht vom Systemzustand.

Dieses Verfahren stellt keine hohen Anforderungen an die Synchronizität der Nächrichtenübertragung. Es verlangt lediglich, daß innerhalb eines Zeitraums, der nicht fest, aber endlich und beschränkt sein muß, jeder Rechner von jedem anderen Rechner wenigstens eine Nachricht empfangen hat. Das Verfahren ist somit anwendbar bei Kommunikationsprotokollen, bei denen Rechner nur während ihnen fest zugewiesenen Zeitschlitzen senden dürfen, aber auch bei einigen Kommunikationsprotokollen, bei denen eine solche feste Zuweisung nicht besteht.

Ferner sind bei Anwendung des erfindungsgemäßen Verfahrens keine speziellen Abläufe erforderlich, um das gesamte verteilte Rechnernetzwerk hochzufahren. Dadurch verringert sich die Komplexität des Rechnernetzwerks deutlich.

Weitere vorteilhafte Ausgestaltungen der Erfindung sind den Unteransprüchen entnehmbar.

Die Erfindung wird nachfolgend anhand der Ausführungsbeispiele und der Zeichnungen eingehend erläutert. Es zeigen:
Fig. 1: Verteiltes Rechnernetzwerk mit drei Rechnern R1, R2 und R3;
Fig. 2: Skizze zur Erläuterung des Begriffs der Übertragungsrunde;
Fig. 3a: Skizze zur Erläuterung des Begriffs der Übertragungsrunde bei Verwendung eines streng synchronen Kommunikationsprotokolls;
Fig. 3b: Skizze zur Erläuterung des Begriffs der Übertragungsrunde bei Verwendung eines virtuell synchronen Kommunikationsprotokolls;
Fig. 4: Verteiltes Rechnernetzwerk mit einem defekten Rechner zur Erläuterung des erfindungsgemäßen Verfahrens;
Fig. 5: Erfindungsgemäßer Ablauf von Übertragungsrunden für ein verteiltes Rechnemetzwerk nach Fig. 4;
Fig. 6: Struktur einer erfindungsgcmäßen Nachricht nach Anspruch 2;
Fig. 7: Verteiltes Rechnernetzwerk zur Erläuterung eines Ausführungsbeispiels nach Anspruch 5;
Fig. 8: Verteiltes Rechnernetzwerk, in dem ein byzantinischer Fehler aufgetreten ist;
Fig. 9: Erfindungsgemäßer Ablauf von Übertragungsrunden beim Booten eines verteilten Rechnernetzwerks, in dem vier Rechnerzustände definiert sind.

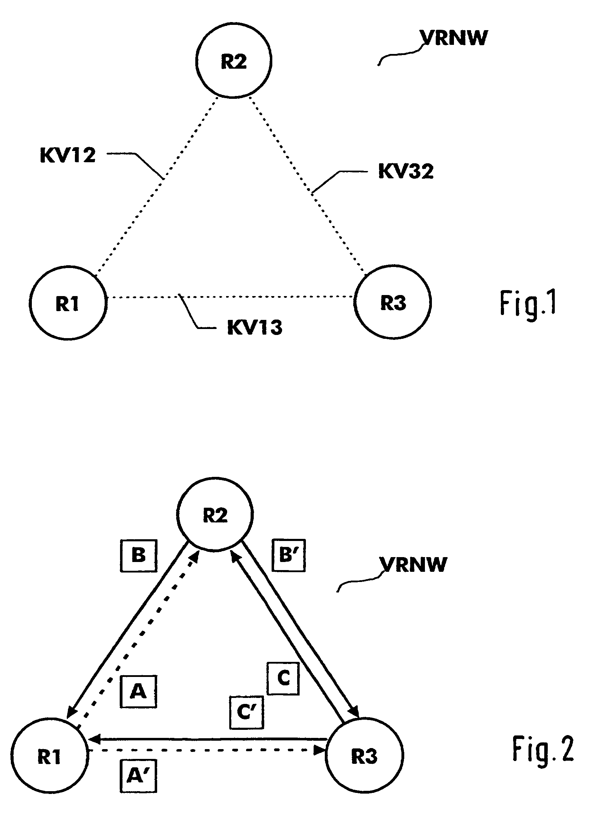

Fig. 1 zeigt ein verteiltes Rechnernetzwerk VRNW, welches drei Rechner R1, R2 und R3 umfaßt. Die Rechner R1...R3 sind so über Kommunikationsverbindungen KV12, KV13 und KV23 miteinander verbunden, daß jeder Rechner mit jedem anderen Rechner im Rechnernetzwerk kommunizieren kann. In Fig. 1 sind diese Kommunikationsverbindungen als physikalische Punkt-zu-Punkt-Verbindungen dargestellt. Häufig wird es jedoch günstiger sein, die Rechner R1...R3 über einen Datenbus miteinander kommunizieren zu lassen.

Das der Kommunikation zwischen den Rechnern R1...R3 zugrunde liegende Kommunikationsprotokoll ist paketorientiert und ermöglicht es, Nachrichtenpakete - im folgenden kurz Nachrichten genannt - gezielt an einzelne Rechner zu adressieren.

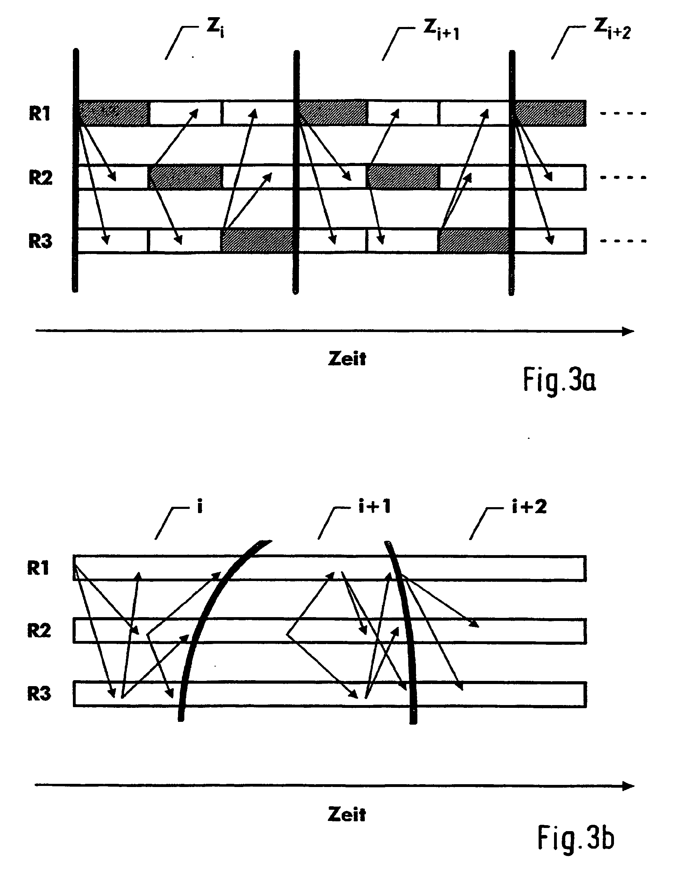

Der Adressat ist in der Lage, anhand der Nachricht deren Sender zu erkennen. Au-Berdem ist das Kommunikationsprotokoll so gestaltet, daß Nachrichten in Form von Übertragungsrunden untereinander ausgetauscht werden. Eine Übertragungsrunde ist dadurch charakterisiert, daß im fehlerfreien Fall in einer Übertragungsrunde jeder Rechner von jedem anderen Rechner eine Nachricht empfängt. Der Begriff Übertragungsrunde wird nachfolgend anhand der Fig. 2 sowie der Fig. 3a und 3b näher erläutert.

Fig. 2 zeigt schematisch den Ablauf einer Übertragungsrunde in dem verteilten Rechnernetzwerk VRNW aus Fig. 1. Es sei angenommen, daß der Rechner R1 Nachrichten A und A' an die beiden anderen Rechner R2 und R3 sendet. Dieser Sendevorgang ist durch die gestrichelt gezeichneten Pfeile dargestellt. Die Nachrichten A und A' können unterschiedlich oder identisch sein. Die Rechner R2 und R3 reagieren auf den Empfang der Nachrichten A bzw. A', indem sie ihrerseits Nachrichten B und B' bzw. C und C' aussenden. Dies führt zu einem Zustand, in dem jeder Rechner von jedem anderen Rechner eine Nachricht empfangen hat.

Wie im einzelnen der Austausch der Nachrichten abgewickelt wird, hängt vom verwendeten Kommunkationsprotokoll ab. Fig. 3a zeigt schematisch den Ablauf von Übertragungsrunden in einem streng gekoppelten synchronen verteilten Rechnernetzwerk. Die Zeitachse ist in mehrere Zyklen Zᵢ unterteilt, deren Grenzen in Fig. 3a durch einen grauen Balken markiert sind. In jedem Zyklus ist jedem Rechner ein Zeitschlitz zugewiesen, während dessen er Nachrichten über die Kommunikationsverbindungen senden darf. Damit die Rechner die ihnen zugewiesenen Zeitschlitze einhalten, müssen alle Rechner eine gemeinsame Zeitbasis haben.

Im Zyklus Zᵢ ist dem Rechner R1 der erste Zeitschlitz zugewiesen ist. Er beginnt daher, Nachrichten an die anderen beiden Rechner R2 und R3 zu senden. Aufgrund von möglicherweise unterschiedlichen Laufzeiten werden die Nachrichten zwar nicht gleichzeitig, aber dennoch innerhalb des dem Rechner R1 zugewiesenen Zeitschlitzes von den anderen Rechnern R2 und R3 empfangen. Der nächste Zeitschlitz im Zyklus Zᵢ ist dem Rechner R2 zugeordnet, der nun seinerseits Nachrichten an die anderen Rechner, also den Rechner R1 und den Rechner R3, sendet. Ebenso verfährt anschließend der Rechner R3. Am Ende des Zyklus Zᵢ hat jeder Rechner von jedem anderen Rechner im Rechnernetzwerk eine Nachricht erhalten. Die folgenden Zyklen Zᵢ₊₁ und Zᵢ₊₂ laufen nach dem gleichen Schema ab.

Dem darunter in Fig. 3b abgebildeten Ablauf von Übertragungsrunden liegt ein virtuell synchrones, lose gekoppeltes verteiltes Rechnernetzwerk zugrunde, bei dem keine gemeinsame Zeitbasis erforderlich ist. Im dargestellten Ausführungsbeispiel wird die erste Übertragungsrunde i vom Rechner R1 angestoßen, indem er Nachrichten an die beiden anderen Rechner R2 und R3 sendet. Sobald die beiden anderen Rechner R2 und R3 die Nachrichten empfangen haben, senden sie ihrerseits Nachrichten an die jeweils anderen Rechner R1 und R3 bzw. R1 und R2. Es sind hier jedoch keine Zeitschlitze festgelegt, innerhalb derer die Rechner senden dürfen und die gesendeten Nachrichten empfangen sein müssen. Eine Kopplung zwischen den Rechnern liegt also nur insoweit vor, als die Rechner R2 und R3 auf den Empfang der vom Rechner R1 gesendeten Nachricht mit dem Aussenden eigener Nachrichten reagieren.

Eine Übertragungsrunde ist auch bei diesem virtuell synchronen Rechnernetzwerk dann beendet, wenn alle Rechner von allen anderen Rechnern eine Nachricht erhalten haben. Dieser Zeitpunkt ist im allgemeinen Fall für jeden Rechner unterschiedlich, was durch den gekrümmten vertikalen Balken angedeutet ist. Erhielte beispielsweise der Rechner R3 vom Rechner R2 keine Nachricht, so würde die Übertragungsrunde für den Rechner R3 erst nach Ablauf einer definierten Wartezeit beendet sein.

Bei diesem virtuell synchronen verteilten Rechnernetzwerk kann im Gegensatz zum oben geschilderten synchronen Rechnernetzwerk jeder beliebige Rechner den Anstoß zu einer Übertragungsrunde geben. Die nächste Übertragungsrunde i + 1 kann deshalb beispielsweise, wie in Fig. 2b dargestellt, vom Rechner R2 angestoßen werden. Der Rechner R1 stellt in dieser Übertragungsrunde i + 1 zuerst deren Ende fest. Er kann daher bereits die nächste Übertragungsrunde n+2 anstoßen, obwohl die Übertragungsrunde n+1 für die anderen beiden Rechner noch nicht beendet ist.

Drei Rechnerzustände

Erfindungsgemäß ist nun vorgesehen, daß jeder Rechner in jeder Übertragungsrunde von den anderen Rechnern empfangene Nachrichten auswertet und in Abhängigkeit vom Ergebnis der Auswertung jedem der anderen Rechner einen von wenigstens drei unterschiedlich definierten Rechnerzuständen zuordnet. Bei einem ersten Ausführungsbeispiel der Erfindung läßt sich eine empfangene Nachricht einer der drei folgenden Kategorien zuordnen:
a) *Mitgliednachricht:* Wird gesendet von einem Rechner, der Mitglied ist. Ein Mitglied reagiert zuverlässig in jeder Übertragungsrunde mit dem Aussenden eigener Nachrichten, wenn es eine Nachricht empfangen hat.
b) *Anwärternachricht*: Wird gesendet von einem Rechner, der noch kein Mitglied ist, aber Mitglied werden möchte.
c) *Nullnachricht*: Es ist entweder überhaupt keine Nachricht empfangen worden oder der empfangende Rechner hat durch Auswertung eines Prüfcodes festgestellt, daß die empfangene Nachricht verfälscht ist.

Ein Rechner, der von einem anderen Rechner eine Nachricht empfangen hat, ordnet nun in Abhängigkeit davon, in welche dieser Kategorien die Nachricht fällt, dem sendenden Rechner einen der drei folgenden Rechnerzuständen zu:
a) "Mitglied" (Abkürzung: m). Ein Rechner, der eine Mitgliednachricht gesendet hat.
b) "Anwärter" (Abkürzung: a). Ein Rechner, der eine Anwärternachricht gesendet hat.
c) "Nichtmitglied" (Abkürzung: n). Ein Rechner, der eine Nullnachricht gesendet hat.

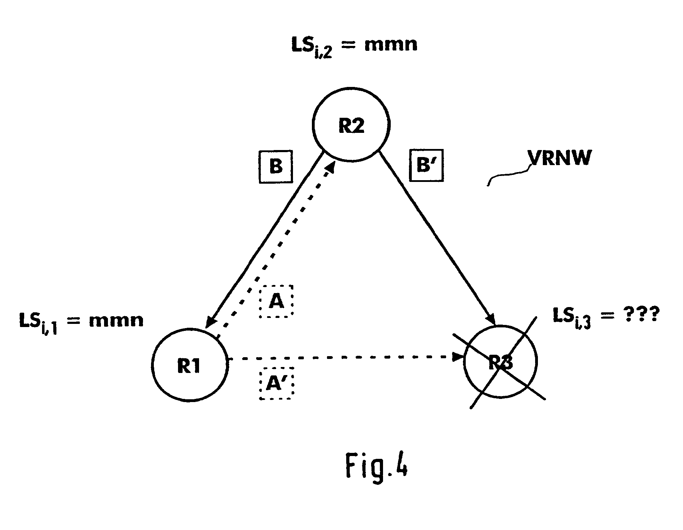

Bei dem in Fig. 4 skizzierten Beispiel hat der Rechner R1 eine Übertragungsrunde i begonnen, was durch die gestrichelt gezeichneten Pfeile angedeutet ist. Der Rechner R3 ist defekt, weswegen er weder an den Rechner R1 noch an den Rechner R2 eine Nachricht sendet. Die Rechner R1 und R2 interpretieren dies als "Nullnachrichten" und ordnen folglich dem defekten Rechner R3 den Zustand "Nichtmitglied" (n) zu. Da die Rechner R 1 und R2 Mitgliednachrichten A und B untereinander erfolgreich ausgetauscht haben, stufen sie sich gegenseitig als "Mitglieder" (m) ein. Außerdem sehen sich die Rechner R1 und R2 selbst als Mitglieder an.

Diese Rechnerzustände setzen die Rechner jeweils zu einer lokalen Sicht vom verteilten Rechnernetzwerk zusammen. Aus der lokalen Sicht vom verteilten Rechnernetzwerk des Rechners R1 in der Übertragungsrunde i (abgekürzt: LS_{i,1}) sind also die Rechner R1 und R2 Mitglieder (m), während der Rechner R3 ein Nichtmitglied (n) ist. Symbolisch ist dies in Fig. 4 durch den Ausdruck LS_{i,1} = mmn dargestellt. Die lokale Sicht des Rechners R2 in der Übertragungsrunde i (abgekürzt: LS_{i,2}) lautet ebenso mmn. Der Rechner R3 hat von allen anderen Rechnern eine Mitgliednachricht empfangen und könnte sich und auch die anderen Rechner als Mitglieder ansehen. Ebensogut könnte der Rechner R3 jedoch auch so schwerwiegend defekt sein, daß er überhaupt keine lokale Sicht vom Systemzustand mehr ermitteln kann. Aus diesem Grunde ist die lokale Sicht des Rechners R3 durch den Ausdruck "???" gekennzeichnet.

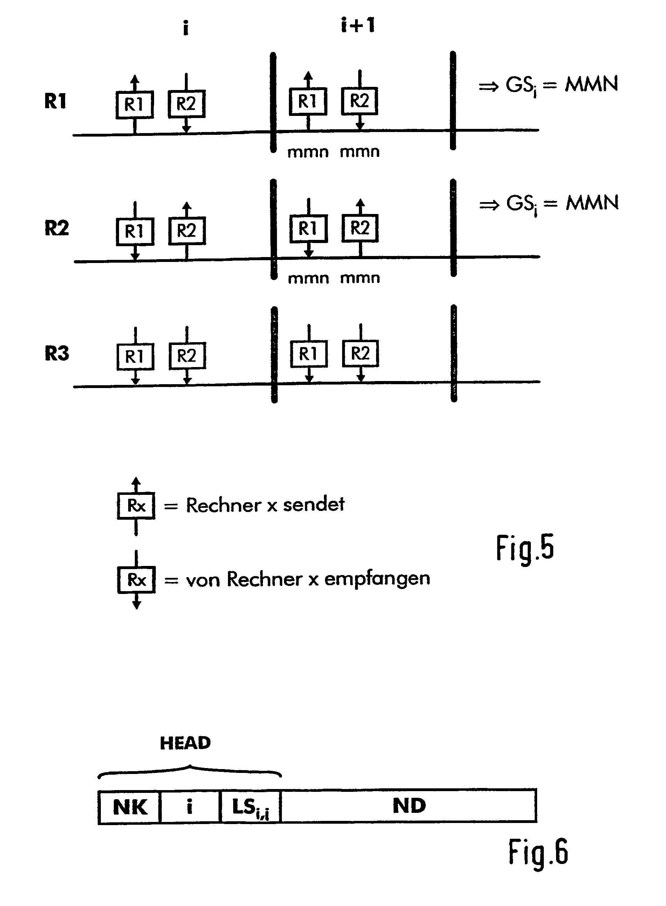

In der nun folgenden Übertragungsrunde i + 1 tauschen erfindungsgemäß die drei Rechner Rx, x = 1, 2 oder 3, die von ihnen in der Übertragungsrunde i ermittelten lokalen Sichten LS_{i,x} aus. Fig. 5 zeigt dies in einer schematischen Darstellung. In der Übertragungsrunde i senden nur die Rechner R1 und R2, jedoch nicht der defekte Rechner R3 Nachrichten. In der Übertragungsrunde i + 1 senden die Rechner R 1 und R2 Nachrichten, denen ein Empfänger die jeweilige lokale Sicht des Senders für die vorausgegangene Übertragungsrunde i entnehmen kann. Am Ende der Übertragungsrunde i + 1 verfügen also beide Rechner R1 und R2 über die eigenen und die lokalen Sichten des jeweils anderen Rechners. Da der Rechner R3 auch in der Übertragungsrunde i + 1 keine Nachricht sendet, kann er den anderen Rechnern nicht seine lokale Sicht vom Systemzustand - sofern eine solche ermittelt worden ist - mitteilen.

Durch den Austausch lokaler Sichten stellt das erfindungsgemäße Verfahren sicher, daß am Ende der Übertragungsrunde i + 1 zumindest jeder nicht defekte Rechner über die gleichen lokalen Sichten verfügt. Wenn nun noch alle Rechner nach der gleichen Regel aus den lokalen Sichten eine globale Sicht vom Systemzustand ermitteln, so ist zuverlässig sichergestellt, daß diese globalen Sichten übereinstimmen und somit einheitlich sind. Daher wird im folgenden nur noch von *einer* globalen Sicht GSᵢ für die Übertragungsrunde i gesprochen.

Eine mögliche Regel, um aus den einzelnen lokalen Sichten eine globale Sicht zu ermitteln, besteht darin, die lokalen Sichten einem einfachen Mehrheitsentscheid zu unterwerfen. Dies bedeutet, daß einem Rechner in der globalen Sicht derjenige Rechnerzustand zugeordnet wird, den der Rechner mehrheitlich in den lokalen Sichten hat. Im angesprochenen Beispielfall mit nur zwei lokalen Sichten, die zudem übereinstimmen, ist das Ergebnis natürlich:

| | | | |
|---|---|---|---|
| LS_{i,1}: | m | m | n |
| LSi.₂: | m | m | n |
| GSᵢ: | M | M | N |

Dabei kennzeichnen Großbuchstaben einen Rechnerzustand in einer globalen Sicht. Wenn der defekte Rechner R3 in der Übertragungsrunde i + 1 seine lokale Sicht an die anderen beiden Rechner R1 und R2 senden würde, so änderte sich an der globalen Sicht dieser Rechner nichts, da sie noch immer in der Mehrheit wären:

| | | | |
|---|---|---|---|
| LS_{i,1}: | m | m | n |
| LS_{i,2}: | m | m | n |
| LS_{i,3}: | ? | ? | ? |
| GSᵢ: | M | M | N |

Hier wird im übrigen deutlich, daß die globale Sicht vom Systemzustand in der Übertragungsrunde i immer erst am Ende der folgenden Übertragungsrunde i + 1 ermittelbar ist, da erst dann die lokalen Sichten von der Übertragungsrunde i ausgetauscht sind.

An die Stelle des soeben erläuterten einfachen Mehrheitsentscheids kann auch ein qualifizierterer Mehrheitsentscheid treten. So könnte beispielsweise bei einem verteilten Rechnernetzwerk mit 5 Rechnern vereinbart sein, daß ein Rechner nur dann in der globalen Sicht als Mitglied (M) betrachtet wird, wenn er in nicht nur 3, sondern in wenigstens 4 lokalen Sichten Mitglied (m) ist. Andererseits kann u. U. auch weniger als ein einfacher Mehrheitsentscheid verlangt werden. Es wird in diesem Zusammenhang auf das weiter unten erläutertes Ausführungsbeispiel verwiesen, bei dem vier Rechnerzustände definiert sind.

Außerdem kann vorgesehen sein, daß bei der Ermittlung der globalen Sicht nicht nur die ausgetauschten lokalen Sichten, sondern zusätzlich auch die globale Sicht einer vorausgegangenen Übertragungsrunde berücksichtigt wird. So kann beispielsweise vereinbart sein, daß nur die lokalen Sichten solcher Rechner berücksichtigt werden, die in der zuletzt ermittelten globalen Sicht Mitglieder gewesen sind. Ebenso kann vereinbart werden, daß es von der zuletzt ermittelten globalen Sicht abhängt, welche Kategorie von Nachrichten ein Rechner senden darf. Ein Beispielhierfür wird weiter unten erläutert.

Das erfindungsgemäße Vorgehen erstreckt sich vorzugsweise auf alle Übertragungsrunden, d. h. in jeder Übertragungsrunde werden lokale Sichten zwischen den Rechnem ausgetauscht. Je nach Anwendung ist jedoch auch denkbar, daß die Ermittlung lokaler Sichten und deren anschließender Austausch untereinander nur auf einen besonderen Anstoß hin oder in (größeren) festen Abständen (z. B. jede zehnte Übertragungsrunde) durchgeführt wird. Der Austausch von lokalen Sichten ist außerdem unabhängig vom Austausch anderer Nachrichten.

Bei einem bevorzugten Ausführungsbeispiel setzen sich die zwischen den Rechnern ausgetauschten Nachrichten alle in der in Fig. 6 dargestellten Weise zusammen. Jede Nachricht enthält einen Nachrichtenkopf HEAD, in dem folgende Informationen abgelegt sind:
a) Angabe der Nachrichtenkategorie NK,
b) Nummer der Übertragungsrunde i,
c) Lokale Sicht LS_{i,j} des Rechners j vom Systemzustand in Übertragungsrunde i.

Falls es die vom verteilten Rechnernetzwerk ausgeführte Applikation erfordert, können in den Nachrichten auch Nutzdaten ND enthalten sein. Wenn - wie beispielsweise in Fig. 4 dargestellt - ein Rechner in einer Übertragungsrunde an alle anderen Rechner Nachrichten A und A' sendet, so dürfen sich diese Nachrichten A und A' nur in ihrem Nutzdaten ND unterscheiden. Der Nachrichtenkopf HEAD muß hingegen in beiden Nachrichten identisch sein, da ansonsten keine einheitliche globale Sicht vom Systemzustand ermittelbar ist.

### Fehlertoleranz

Wenn, wie in Fig. 4 dargestellt, in einer Übertragungsrunde jeder Rechner von jedem Rechner genau eine Nachricht erhält, so läßt sich mit Hilfe des soeben geschilderten erfindungsgemäßen Verfahrens zuverlässig eine einheitliche globale Sicht vom Systemzustand ermitteln, wenn der Defekt eines Rechners einer der beiden folgenden Fehlerklassen zugeordnet werden kann:
1. Der Rechner sendet keinerlei Nachrichten aus.
2. Der Rechner sendet fehlerhafte Nachrichten aus, wobei sich aber der Fehler für alle anderen Rechner in der gleichen Weise offenbart.

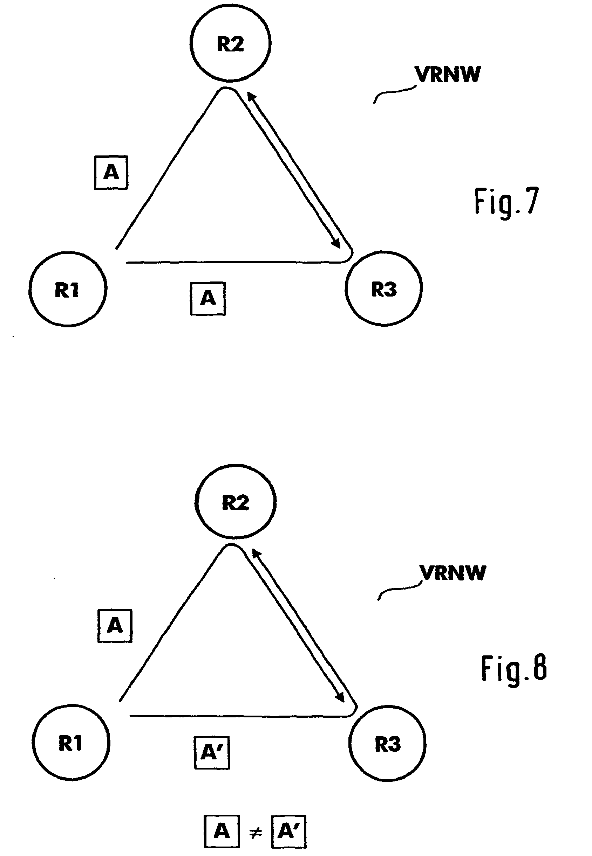

Besonders vorteilhaft läßt sich das erfindungsgemäße Verfahren einsetzen bei einem Kommunikationsprotokoll, welches gewährleistet, daß ein von einem beliebigen Rechner an die anderen Rechner gesendetes Datenpaket so von diesen anderen Rechnem weitergeleitet wird, daß jeder der anderen Rechner dieses Datenpaket im fehlerfreien Fall wenigstens zweimal empfängt. Dies sei anhand der Fig. 7 näher erläutert. Bei dem dort abgebildeten verteilten Rechnernetzwerk sendet der Rechner R1 identische Nachrichten A an den Rechner R2 und an den Rechner R3. Der Rechner R2 empfängt die Nachricht A und sendet sie unverändert weiter an den Rechner R3. Der Rechner R3 verfährt mit der vom Rechner R1 empfangenen Nachricht ebenso. Auf diese Weise empfangen die Rechner R2 und R3 die Nachricht A jeweils zweimal, nämlich einmal direkt vom Rechner R1 und einmal indirekt über den Rechner R3 bzw. R2.

Bei einem solchen Kommunikationsprotokoll kann mit Hilfe des erfindungsgemäßen Verfahrens auch dann eine einheitliche globale Sicht vom Systemzustand ermittelt werden, wenn der Defekt eines Rechners einer dritten Fehlerklasse zugeordnet werden kann. Bei dieser Fehlerklasse sendet der defekte Rechner wie auch bei der oben erwähnten 2. Fehlerklasse fehlerhafte Nachrichten. Der Fehler kann sich jedoch für die anderen Rechner in unterschiedlicher Weise offenbaren (sog. byzantinischer Fehler).

Ein solches Fehlerszenario ist in Fig. 8 skizziert. Der Rechner R1 ist defekt und generiert anstelle von identischen Nachrichten unterschiedliche Nachrichten A und A'. Beide Nachrichten werden mit "korrekten" Prüfcodes versehen, so daß die beiden anderen Rechner R2 und R3 keinen Fehler feststellen können. Wenn jedoch das Kommunikationsprotokoll in der oben erwähnten Weise ein Weiterleiten der Nachrichten sicherstellt, so wird beispielsweise der Rechner R2 feststellen, daß die direkt vom Rechner R1 empfangene Nachricht A nicht identisch ist mit der über den Rechner R3 empfangenen Nachricht A'. Eine entsprechende Feststellung wird auch der Rechner R3 machen. In den lokalen Sichtweisen der beiden nicht defekten Rechner R2 und R3 wird aufgrund dieser Diskrepanz der Rechner R1 als Nichtmitglied angesehen werden. Es wird hierbei lediglich angenommen, daß beim Weiterleiten von Nachrichten keine Verfälschungen auftreten. Ansonsten ließe sich beispielsweise nicht mehr für den Rechner R2 unterscheiden, ob der Rechner R1 unterschiedlichen Nachrichten gesendet hat oder ob der Rechner R3 eine vom Rechner R1 empfangene Nachricht A zu einer Nachricht A' verfälscht hat.

Außerdem läßt sich bei Verwendung des angesprochenen Kommunikationsprotokolls auch dann eine einheitliche globale Sicht vom Systemzustand ermitteln, wenn eine Kommunikationsverbindung zwischen den Rechnern gestört ist. Fällt beispielsweise in Fig. 7 zwischen den Rechnern R1 und R2 die Kommunikationsverbindung aus, so können die beiden betroffenen Rechner R1 und R2 noch weiter über den Rechner R3 Nachrichten austauschen. Wenn in den Nachrichten zusätzlich der Weg angegeben wird, den die Nachrichten genommen haben, so können, wie sich leicht nachvollziehen läßt, überdies alle Rechner ermitteln, welche der Kommunikationsverbindungen gestört ist.

### Vier Rechnerzustände

Bei einem bevorzugten Ausführungsbeispiel werden den Rechnern nicht drei, sondern vier unterschiedlich definierte Zustände zugeordnet. Entsprechend gibt es auch vier unterschiedlich definierte Nachrichtenkategorien:
a) *Mitgliednachricht* (Abkürzung: mb): Wird gesendet von einem Rechner, der Mitglied ist. Ein Mitglied reagiert zuverlässig in jeder Übertragungsrunde mit dem Aussenden eigener Nachrichten, wenn es eine Nachricht empfangen hat.
b) *Einbindungsnachricht* (Abkürzung: bind): Wird von einem Rechner gesendet, der noch kein Mitglied ist, aber bereits in der globalen Sicht als ein Anwärter (s. u.) angesehen wird.
c) *Bootnachricht* (Abkürzung: boot): Wird gesendet von einem Rechner, der sich in einem Bootvorgang befindet oder einen solchen Vorgang abgeschlossen hat.
d) *Nullnachricht* (Abkürzung: null): Es ist entweder überhaupt keine Nachricht empfangen worden oder der empfangene Rechner hat durch Auswertung eines Prüfcodes festgestellt, daß die empfangene Nachricht verfälscht ist.

Diesen vier verschiedenen Nachrichtenkategorien entsprechen die folgenden vier Rechnerzustände:
a) "Mitglied" (Abkürzung: m). Ein Rechner, der eine Mitgliednachricht gesendet hat.
b) "Vorläufiges Mitglied" (Abkürzung: p). Ein Rechner, der eine Einbindungsnachricht gesendet hat.
c) "Anwärter" (Abkürzung: a). Ein Rechner, der eine Bootnachricht gesendet hat.
d) "Nichtmitglied" (Abkürzung: n). Ein Rechner, der eine Nullnachricht gesendet hat.

Die Bedeutung dieser Nachrichtenkategorien und der Rechnerzustände und die Vorteile, die sich aus diesen Definitionen ergeben, sollen nachfolgend anhand eines Beispiels deutlich gemacht werden.

### Booten eines verteilten Rechnernetzwerkss

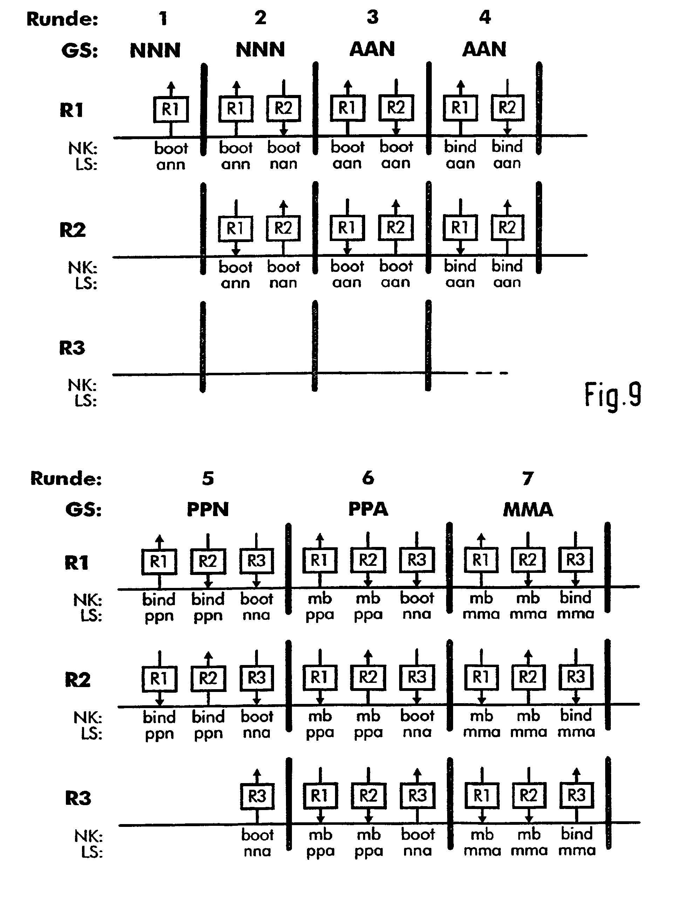

Fig. 9 zeigt in einer schematischen Darstellung, wie mit Hilfe der vier Rechnerzustände auch beim Booten des verteilten Rechnemetzwerks jederzeit eine einheitliche globale Sicht des Systemzustandes ermittelbar ist. Es wird in diesem Beispiel angenommen, daß zuerst der Rechner R1, unmittelbar darauf der Rechner R2 und einige Zeit später der Rechner R3 bootet. Die erste Übertragungsrunde 1 beginnt folglich mit einer Bootnachricht (boot), die der Rechner R1 an die anderen Rechner sendet. In Fig. 9 ist jeweils die Nachrichtenkategorie NK sowie die jeweilige lokale Sicht LS der einzelnen Rechner angegeben. Angegeben ist ferner die von den Rechnern ermittelte globale Sicht.

Da der Rechner R1 noch keine Nachrichten von anderen Rechnern empfangen konnte, ordnet er ihnen den Zustand Nichtmitglied (n) zu. Sich selbst sieht er als Anwärter (a), da er eine Bootnachricht sendet. Da noch keine andere lokale Sicht vorliegt, führt ein Mehrheitsentscheid automatisch zum niedrigstens möglichen globalen Systemzustand, nämlich GS₁ = NNN.

In der Übertragungsrunde 2 sendet außer dem Rechner R 1 auch der Rechner R2 eine Bootnachricht. Die Rechner R1 und R2 ordnen daher sich gegenseitig den Zustand Anwärter (a) zu, so daß für die lokalen Sichten LS_{2,1} = LS_{2,2} = aan gilt. Aus der vorhergehenden Übertragungsrunde liegt nur eine lokale Sicht vor, so daß ein Mehrheitsentscheid der lokalen Sichten zu keinem Ergebnis führen kann. Es bleibt folglich beim globalen Systemzustand NNN.

In der Übertragungsrunde 3 senden die Rechner R1 und R2 erneut Bootnachrichten und tauschen ihre lokalen Sichten der vorangegangenen Übertragungsrunde 2 aus. Da beide lokalen Sichten übereinstimmen, ermitteln sie beide als globale Sicht GS₃ = AAN.

Da nun sowohl der Rechner R1 als auch der Rechner R2 in der globalen Sicht Anwärter sind, können sie nun in der folgenden Übertragungsrunde 4 Einbindungsnachrichten (bind) senden. Aufgrund des Empfangs von Einbindungsnachrichten ordnen die Rechner R1 und R2 sich gegenseitig den Rechnerzustand Vorläufiges Mitglied (p) zu, so daß die lokalen Sichten, die diese beiden Rechner in der Übertragungsrunde 5 austauschen, LS_{4,1} = LS_{4,2} = ppn lauten.

In der Übertragungsrunde 5 senden die Rechner noch immer Einbindungsnachrichten, da sie in der zuvor ermittelten globalen Sicht noch Anwärter (A) waren. Aufgrund der übereinstimmenden lokalen Sichten LS_{4,1} = LS_{4,2} = ppn ergibt sich für die globale Sicht nun GS₅ = PPN. In Übertragungsrunde 5 sendet nun auch erstmals der Rechner R3 eine Bootnachricht, so daß er am Ende der folgenden Übertragungsrunde 6 bereits global als Anwärter (A) angesehen wird. In dieser Übertragungsrunde können die beiden Rechner R1 und R2 erstmals Mitgliednachrichten senden, da sie in der Übertragungsrunde zuvor global als Vorläufige Mitglieder galten. In Übertragungsrunde 7 sind beide Rechner R1 und R2 schließlich Mitglieder in der globalen Sicht. Das verteilte Rechnernetzwerk verfügt nun über eine Mehrheit von Mitgliedern.

Aus diesem Beispiel ist deutlich geworden, wie aufgrund des erfindungsgemäßen Verfahrens eine Hierarchie von Rechnerzuständen geschaffen wird, in der Rechner stufenweise von Übertragungsrunde zu Übertragungsrunde aufsteigen können. Bei dem soeben erläuterten Beispiel steigt ein Rechner nur dann in der globalen Sicht auf, wenn eine mehrheitliche Übereinstimmung der lokalen Sichten vorliegt. Gegebenenfalls kann es jedoch vorteilhaft sein, daß ein Rechner bereits dann in der globalen Sicht aufsteigt, wenn er von einem *einzigen* Rechner, der global als Mitglied angesehen wird, in der höheren Hierarchiestufe gesehen wird. Nur beim Aufstieg in die global höchste Hierarchiestufe (M) wird weiterhin ein Mehrheitsentscheid verlangt. Auf diese Weise läßt sich in vielen Fällen das Aufsteigen in der Hierarchie beschleunigen.

Gibt sich ein Rechner als fehlerhaft zu erkennen, so wird vorzugsweise vereinbart, daß er in den lokalen Sichten der anderen Rechner sofort in den niedrigsten Rechnerzustand, also Nichtmitglied (n), absteigt.Denkbar ist jedoch auch ein stufenweiser Abstieg. In welche Hierarchiestufe der Rechner abzusteigen hat, kann dann beispielsweise von der Art des aufgetretenen Fehlers abhängig gemacht werden, falls diese ermittelt werden kann.

Die (Wieder-)Aufnahme eines einzelnen Rechners in das verteilte Rechnernetzwerk verläuft grundsätzlich analog zu dem soeben geschilderten Ablauf. Man vollziehe hierzu anhand der Fig. 9 nach, wie der zuletzt bootende Rechner R3 in das Rechnernetzwerk aufgenommen wird. In der - nicht mehr dargestellten - Übertragungsrunde 8 sendet der Rechner R3 erneut Einbindungsnachrichten (bind). Am Ende der Übertragungsrunde gilt er in der globalen Sicht bereits als Vorläufiges Mitglied (p). In Übertragungsrunde 9 sendet der Rechner 3 Mitgliednachrichten (mb) und wird in der folgenden Übertragungsrunde 10 auch global als Mitglied (m) gesehen.

Es versteht sich, daß die Anwendung des erfindungsgemäßen Verfahrens nicht auf verteilte Rechnernetzwerkee mit drei Rechnern beschränkt ist. Es ist gerade ein besonderer Vorzug des Verfahrens, daß es äußerst flexibel hinsichtlich der Zahl und Art der Rechner, dem zugrundeliegenden Kommunikationsprotokoll und den möglichen Anwendungen des Rechnersystems ist. Insbesondere wird weder eine besondere Hardware, noch ein spezielles Betriebssystem für die Rechner verlangt.

## Patentansprüche

1. Verfahren zur Ermittlung einer einheitlichen globalen Sicht (GS) vom Systemzustand eines wenigstens drei Rechner (R1, R2, R3) umfassenden verteilten Rechnernetzwerks (VRNW),
wobei
die Rechner über Kommunikationsverbindungen (KV12, KV 13, KV32) untereinander Nachrichte in aufeinanderfolgenden Übertragungsrunden austauschen, **dadurch gekennzeichnet, daß** Nachrichten wenigstens die nachfolgenden Angaben enthalten:
a) Angabe einer Nachrichtenkategorie (NK),
b) Nummer der Übertragungsrunde (i), in der die Nachricht gesendet wird,
c) Eine lokale Sicht (LS_{i,j}) des sendenden Rechners vom Systemzustand,
wobei im fehlerfreien Fall in einer Übertragungsrunde jeder Rechner von jedem anderen Rechner eine Nachricht empfängt, daß
a) jeder Rechner in einer Übertragungsrunde von den anderen Rechnern empfangene Nachrichten auswertet und in Abhängigkeit vom Ergebnis der Auswertung jedem der anderen Rechner in Abhängigkeit davon, in welche Nachrichtenkategorie die empfangene Nachricht des anderen Rechners fällt, einen von wenigstens drei unterschiedlich definierten Rechnerzuständen zuordnet und daraus die lokale Sicht (LS_{i,j}) vom Systemzustand ermittelt, und daß
b) die Rechner die von ihnen ermittelten lokalen Sichten vom Systemzustand untereinander austauschen und jeder Rechner aus den ausgetauschten lokalen Sichten eine einheitliche globale Sicht vom Systemzustand ermittelt.

2. Verfahren nach einem der vorhergehenden Ansprüche, bei dem bei der Ermittlung der globalen Sicht vom Systemzustand auch die globale Sicht einer vorausgegangenen Übertragungsrunde berücksichtigt wird.

3. Verfahren nach einem der vorhergehenden Ansprüche, bei dem bei der Ermittlung der globalen Sicht vom Systemzustand ein Mehrheitsentscheid über die einzelhen lokalen Sichten durchgeführt wird.

4. Verfahren nach einem der vorhergehenden Ansprüche, bei dem eine von einem beliebigen Rechner an die anderen Rechner gesendete Nachricht so von diesen anderen Rechnern weitergeleitet wird, daß jeder der anderen Rechner diese Nachricht im fehlerfreien Fall wenigstens zweimal empfängt.

5. Verfahren nach einem der vorhergehenden Ansprüche, bei dem eine Übertragungsrunde folgende Schritte umfaßt:
a) ein beliebiger Rechner (R1) sendet auf eigene Initiative an jeden anderen Rechner (R2, R3) im verteilten Rechnernetzwerk ein Datenpaket (A, A'),
b) jeder der anderen Rechner (R2, R3) reagiert auf den Empfang des Datenpakets (A, A') innerhalb einer vorgebbaren Zeitspanne mit dem Aussenden jeweils eines eigenen Datenpakets (B, B'; C, C') an jeweils alle anderen Rechner im Rechnernetzwerk.

6. Verteiltes Rechnernetzwerk (VRNW) mit wenigstens drei Rechner (R1, R2, R3) und Mitteln zur Ermittlung einer einheitlichen globalen Sicht (GS) vom Systemzustand des Rechnernetzwerks,
wobei
Kommunikationsverbindungen (KV12, KV13, KV32) vorgesehen sind, über die die Rechner untereinander Nachrichten in aufeinanderfolgenden Übertragungsrunden austauschen, **dadurch gekennzeichnnet, daß** die Nachrichten wenigstens die nachfolgenden Angaben enthalten:
a) Angabe einer Nachrichtenkategorie (NK),
b) Nummer der Übertragungsrunde (i), in der die Nachricht gesendet wird,
c) Eine lokale Sicht (LS_{i,j}) des sendenden Rechners vom Systemzustand, wobei im fehlerfreien Fall in einer Übertragungsrunde jeder Rechner von jedem anderen Rechner eine Nachricht empfängt, daß
a) jeder Rechner einen Prozessor hat, der die in einer Übertragungsrunde von den anderen Rechnern empfangenen Nachrichten auswertet und in Abhängigkeit vom Ergebnis der Auswertung jedem der anderen Rechner in Abhängigkeit davon, in welche Nachrichtenkategorie die empfangene Nachricht des anderen Rechners fällt, einen von wenigstens drei unterschiedlich definierten Rechnerzuständen zuordnet und daraus die lokale Sicht (LS_{i,j}) vom Systemzustand ermittelt, und daß
b) der jeweilige Prozessor veranlaßt, daß die Rechner die von ihnen ermittelten lokalen Sichten vom Systemzustand untereinander austauschen, und daß der jeweilige Prozessor aus den ausgetauschten lokalen Sichten eine einheitliche globale Sicht vom Systemzustand ermittelt.

7. Verteiltes Rechnernetzwerk nach Anspruch 6, bei dem der Prozessor bei der Ermittlung der globalen Sicht vom Systemzustand auch die globale Sicht einer vorausgegangenen Übertragungsrunde berücksichtigt.

8. Verteiltes Rechnernetzwerk nach einem der Ansprüche 6 oder 7, bei dem der Prozessor bei der Ermittlung der globalen Sicht vom Systemzustand ein Mehrheitsentscheid durchgeführt.

9. Verteiltes Rechnernetzwerk nach einem der Ansprüche 6 bis 8, bei dem ein von einem beliebigen Rechner an die anderen Rechner gesendetes Datenpaket so von diesen anderen Rechnern weitergeleitet wird, daß jeder der anderen Rechner dieses Datenpaket im fehlerfreien Fall wenigstens zweimal empfängt

10. Verteiltes Rechnernetzwerk nach einem der Ansprüche 6 bis 9, bei dein eine Übertragungsrunde folgende Schritte umfaßt:
a) ein beliebiger Rechner (R1) sendet auf eigene Initiative an jeden anderen Rechner (R2, R3) des verteilten Rechnernetzwerks ein Datenpaket (A, A'),
b) jeder der anderen Rechner (R2, R3) reagiert auf den Empfang des Datenpakets (A, A') innerhalb einer vorgebbaren Zeitspanne mit dem Aussenden jeweils eines eigenen Datenpakets (B, B'; C, C') an jeweils alle anderen Rechner im Rechnernetzwerk.

## Claims

1. A method of determining a uniform global view (GS) of the system status of a distributed computer network (VRNW) comprising at least three computers (R1, R2, R3),
wherein
the computers exchange with one another messages over communication links (KV12, KV13, KV32) in successive transmission rounds,
**characterized in that**
the messages contain at least the following information:
a) a message category (NK) specification,
b) the number of the transmission round (i) in which the message is sent,
c) a local view (LSᵢⱼ) of the system status from the sending computer,
with each of the computers receiving a message from each of the other computers in one transmission round in the case of the absence of an error, that
a) in one transmission round, each of the computers evaluates messages received from the other computers and, depending on the result of the evaluation, assigns, depending on the message category under which the received message of the other computer falls, one of at least three differently defined computer statuses to each of the other computers and determines the local view (LSᵢⱼ) of the system status therefrom, and that
b) the computers exchange with one another the local views of the system status determined by them, and each of the computers determines a uniform global view of the system status from the local views exchanged.

2. A method as claimed in any one of the preceding claims with the determination of the global view of the system status also taking into account the global view of a preceding transmission round.

3. A method as claimed in any one of the preceding claims with the determination of the global view of the system status involving a majority decision on the individual local views.

4. A method as claimed in any one of the preceding claims with a message sent by any of the computers to the other computers being forwarded by said other computers in such a manner that in the case of the absence of an error, each of the other computers will receive said message at least twice.

5. A method as claimed in any one of the preceding claims with one transmission round comprising the following steps:
a) Any of the computers (R1) sends, on its own initiative, a data packet (A, A') to each of the other computers (R2, R3) in the distributed computer network,
b) each of the other computers (R2, R3) responds to the reception of the data packet (A, A') within a predeterminable period of time with the transmission of a data packet (B, B'; C, C') of its own to all other computers in the computer network.

6. A distributed computer network (VRNW) comprising at least three computers (R1, R2, R3) and means for determining a uniform global view (GS) of the system status of the computer network,
wherein
communication links (KV12, KV13, KV32) are provided over which the computers exchange with one another messages in successive transmission rounds,
**characterized in that**
the messages contain at least the following information:
a) a message category (NK) specification;
b) the number of the transmission round (i) in which the message is sent,
c) a local view (LSᵢⱼ) of the system status from the sending computer, wherein each of the computers receives a message from each of the other computers in one transmission round in the case of the absence of an error, that
a) each of the computers has a processor which evaluates the messages received from the other computers in one transmission round and, depending on the result of the evaluation, assigns, depending on the message category under which the received message of the other computer falls, one of at least three differently defined computer statuses to each of the other computers and determines the local view (LSᵢⱼ) of the system status therefrom, and that
b) the respective processor causes the computers to exchange with one another the local views of the system status determined by them, and that the respective processor determines a uniform global view of the system status from the local views exchanged.

7. A distributed computer network as claimed in claim 6 with the global view of a preceding transmission round also being taken into account by the processor in determining the global view of the system status.

8. A distributed computer network as claimed in any one of claims 6 to 7 with the processor determining the global view of the system status by a majority decision.

9. A distributed computer network as claimed in any one of claims 6 to 8 with a data packet sent by any of the computers to the other computers being forwarded by said other computers in such a manner that in the case of the absence of an error, each of the other computers will receive said data packet at least twice.

10. A distributed computer network as claimed in any one of claims 6 to 9, with one transmission round comprising the following steps:
a) Any of the computers (R1) sends, on its own initiative, a data packet (A, A') to each of the other computers (R2, R3) in the distributed computer network,
b) each of the other computers (R2, R3) responds to the reception of the data packet (A, A') within a predeterminable period of time with the transmission data packet (B, B'; C, C') of its own to all other computers in the computer network.

## Revendications

1. Procédé de détermination d'une vue globale unitaire (GS) de l'état d'un système constitué d'un réseau réparti de calculateurs (VRNW) qui comprend au moins trois calculateurs (R1, R2, R3), dans lequel
par des liaisons de communication (KV12, KV13, KV32) les calculateurs échangent les uns avec les autres des messages par salves de transmission successives,
**caractérisé en ce que**
les messages contiennent au moins les données suivantes :
a) indication de la catégorie du message (NK),
b) numéro de la salve de transmission (i) dans laquelle le message est envoyé et
c) une vue locale (LSᵢⱼ) de l'état du système par le calculateur émetteur,
**en ce que** dans un cas sans défaut, chaque calculateur reçoit de chaque autre calculateur un message dans une salve de transmission,
et **en ce que**
a) chaque calculateur évalue les messages reçus des autres calculateurs dans une salve de transmission et, en fonction du résultat de l'évaluation, attribue un parmi au moins trois états définis différents de calculateur à chacun des autres calculateurs selon la catégorie de message à laquelle le message reçu de l'autre calculateur correspond et détermine sur cette base la vue locale (LSᵢⱼ) de l'état du système et
b) les calculateurs échangent entre eux les vues locales de l'état du système qu'ils ont déterminées et chaque calculateur détermine une vue globale unitaire de l'état du système à partir des vues locales échangées.

2. Procédé selon la revendication 1, dans lequel la vue globale d'une salve de transmission précédente est également prise en compte lors de la détermination de la vue globale de l'état du système.

3. Procédé selon l'une des revendications précédentes, dans lequel une décision majoritaire concernant les différentes vues locales est prise lors de la détermination de la vue globale de l'état du système.

4. Procédé selon l'une des revendications précédentes, dans lequel un message envoyé par un calculateur quelconque aux autres calculateurs est transféré par ces autres calculateurs de telle sorte que chacun des autres calculateurs reçoive au moins deux fois ce message dans un cas sans défaut.

5. Procédé selon l'une des revendications précédentes, dans lequel une salve de transmission comprend les étapes suivantes :
a) un calculateur quelconque (R1) envoie de sa propre initiative un paquet de données (A, A') à chaque autre calculateur (R2, R3) du réseau réparti de calculateurs,
b) chacun des autres calculateurs (R2, R3) réagit à la réception du paquet de données (A, A') à l'intérieur d'un intervalle de temps prédéterminé par l'émission de son propre paquet de données (B, B'; C, C') à chacun de tous les autres calculateurs du réseau de calculateur.

6. Réseau réparti de calculateurs (VRNW) doté d'au moins trois calculateurs (R1, R2, R3) et de moyens de détermination d'une vue globale unitaire (GS) de l'état du système de réseau de calculateurs,
dans lequel
des liaisons de communication (KV12, KV13, KV32) par lesquelles les calculateurs échangent entre eux des messages par des salves de transmission successives sont prévues,
**caractérisé en ce que**
les messages contiennent au moins les données suivantes :
a) indication de la catégorie du message (NK),
b) numéro de la salve de transmission (i) dans laquelle le message est envoyé et
c) une vue locale (LSᵢⱼ) de l'état du système par le calculateur émetteur,
**en ce que** dans un cas sans défaut, chaque calculateur reçoit un message de chaque autre calculateur dans une salve de transmission,
et **en ce que**
a) chaque calculateur évalue les messages reçus des autres calculateurs dans une salve de transmission et, en fonction du résultat de l'évaluation, attribue un parmi au moins trois états définis différents de calculateur à chacun des autres calculateurs selon la catégorie de message à laquelle le message reçu de l'autre calculateur correspond et détermine sur cette base la vue locale (LSᵢⱼ) de l'état du système et
b) les calculateurs échangent entre eux les vues locales de l'état du système qu'ils ont déterminées et chaque calculateur détermine une vue globale unitaire de l'état du système à partir des vues locales échangées.

7. Réseau réparti de calculateurs selon la revendication 6, dans lequel le processeur tient compte également de la vue globale d'une salve de transmission précédente lors de la détermination de la vue globale de l'état du système.

8. Réseau réparti de calculateurs selon l'une des revendications 6 ou 7, dans lequel le processeur prend une décision majoritaire lors de la détermination de la vue globale de l'état du système.

9. Réseau réparti de calculateurs selon l'une des revendications 6 à 8, dans lequel un paquet de données renvoyé par un calculateur quelconque aux autres calculateurs est transféré par ces autres calculateurs de telle sorte que dans un cas sans défaut, chacun des autres calculateurs reçoit au moins deux fois ce paquet de données.

10. Réseau réparti de calculateurs selon l'une des revendications 6 à 9, dans lequel une salve de transmission comprend les étapes suivantes :
a) un calculateur quelconque (R1) envoie de sa propre initiative un paquet de données (A, A') à chaque autre calculateur (R2, R3) du réseau réparti de calculateurs,
b) chacun des autres calculateurs (R2, R3) réagit à la réception du paquet de données (A, A') à l'intérieur d'un intervalle de temps prédéterminé par l'émission de son propre paquet de données (B, B'; C, C') à chacun de tous les autres calculateurs du réseau de calculateurs.
